# EUROPEAN PATENT SPECIFICATION

(11) **EP 1 112 906 B1**
(45) Date of publication and mention of the grant of the patent: **19.09.2007**
(21) Application number: 99126207.2
(22) Date of filing: 30.12.1999
(51) Int. Cl.: B60T 8/94, F15B 19/00, G01M 3/00

(54) **Method for recognition of and/or compensation for a leakage within a hydraulic anti-lock braking and/or anti-spin regulation system**
Verfahren zur Erkennung und/oder Kompensation einer Leckage in einem hydraulischen Antiblockier-Brems- und/oder Antriebsschlupfregelungssystem
Méthode pour la reconnaissance et/ou compensation d'une fuite dans un système de freinage hydraulique à antiblocage et/ou à antipatinage

(43) Date of publication of application: 04.07.2001
(73) Proprietor: ROBERT BOSCH GMBH, 70469 Stuttgart (DE)
(72) Inventor: Wandel, Helmut, 71706 Markgroeningen (DE)

(56) References cited:
- EP-A- 0 485 367
- EP-A- 0 841 231
- EP-A- 0 933 275
- DE-A- 3 819 490
- US-A- 5 727 852
- US-A- 5 788 337
- US-A- 5 902 020

## Description

The present invention concerns a method as defined in the preamble of Claim 1, i.e. a method for recognition of and/or compensation for a leakage within a hydraulic anti-lock braking and/or anti-spin regulation system.

As an example, a hydraulic system can be used for the control of car brakes, in particular for hydraulic anti-lock braking (ABS) and/or anti-spin regulation (ASR). Within this example, the hydraulic system comprises several line branches and is modified by means of valves which open or close predefined line branches. Hence, leaks may particularly occur within the valves and therefore reduce the precision of the system performance. In particular within this example, no solutions to recognize and/or compensate for such leakages are known.

From EP 0 933 275 a method for recognition of a leakage within a hydraulic brake system is known. This method uses a special test cycle to recognise a leakage. With this method it is not possible to recognise and/or compensate for a leakage during braking operation.

From US-A 5 902 02 a method for recognition of a leakage within a hydraulic brake system is known. This method uses information about loss of pressure in the hydraulic system, if the brake is not activated. With this method it is not possible to localise the leakage and/or compensate for a leakage during beraking operation.

From EP 0 485 367 a further method for recognition of a leakage within a hydraulic brake system is known. This method compares the deccelaration of one or more wheels caused by a certain impact on the wheel with a predefined threshhold value.

It is the object of the present invention, to provide a method for recognition of and/or compensation for a leakage within a hydraulic antilock braking and/or anti-spin regulation system.

The object of the present invention is achieved by the method claim 1.

The use of already available system components for leak detection makes the implementation of additional components unnecessary respectively reduces the need for such implementations. Hence, the inventive approach allows an inexpensive detection of leaks within a hydraulic system.

According to the invention the presence of a leakage is detected by determination means and a pressure holding time is correspondingly decreased by control means.

This again allows a compensation of effects due to leaks within the hydraulic antilock braking and/or anti-spin regulation system and therefore improves the performance of the system.

According to the invention hydraulic pressure is built up by pressure building means. The obtained pressure is estimated by estimation means. The impact on any whell brake is measured by already available wheel speed sensors. A predefined relation between the obtained pressure as estimated and the resulting velocity of any braked wheel is used to determine the absence or presence of a leakage within the hydraulic antilock braking and/or anti-spin regulation system by determination means.

The estimation means can be implemented for example by software means within existing control components. Therefore, no pressure measuring means are necessary to perform the inventive method. However, if available, such means may be alternatively or additionally used. The already available measuring means may be required for general control purposes. Hence, within a corresponding implementation, the inventive method might not require any additional hardware means.

Within an advantageous implementation, for the estimation of the obtained pressure the pressure building time is taken into account by the estimation means.

For example, the pressure is produced by means of a high pressure pump. Hence, the pressure achieved is correlated with the running time of the high pressure pump which is the pressure building time within this example. Beyond this background, an estimation starting with the pressure building time allows an easy and nevertheless rather accurate determination of the approximate pressure within the hydraulic antilock braking and/or anti-spin regulation system.

According to the invention the impact on any wheel brake principally corresponds to a reduction of a velocity of each corresponding wheel. The velocity of the wheels is measured by means of wheel speed sensors. A predefined relation between the obtained pressure as estimated and the resulting velocity of any braked wheel is used to determine the absence or presence of a leakage within the hydraulic antilock braking and/or anti-spin regulation system by determination means.

This allows an easy and inexpensive implementation of the inventive method within a hydraulic braking system for a car.

Advantageously pressure is built up by pressure building means for braking at least one driven wheel during an anti-spin regulation. The velocity of the driven and braked wheel and the velocity of a non-driven and non-braked wheel or a driven but non-braked wheel or a driven and less-braked wheel are detected by means of wheel speed sensors. The detected velocities are subtracted from each other by subtraction means. The thereby obtained number is compared to a predefined maximum number by comparison means. An exceeding of the maximum number is interpreted as presence of a leakage within the hydraulic antilock braking and/or anti-spin regulation system (and vice versa) by determination means.

The implementation of a corresponding leakage detection would be particularly easy to realize within a hydraulic braking system in a car since just the components and information out of a regular ASR procedure are used.

Within an advantageous implementation, the presence of a leakage is detected by determination means. A pressure building time is correspondingly increased by control means.

This allows a compensation of effects due to leaks within the hydraulic antilock braking and/or anti-spin regulation system and therefore improves the performance of the system.

Within an advantageous implementation of the inventive method, starting of the leakage recognition and/or compensation procedure by starting means depends on the results of a comparison of determined values against a predefined threshold by comparison means.

This allows to take into account general system conditions due to which leakage recognition and/or compensation are or are not required.

Advantageously, the leakage recognition and/or compensation procedure is only started by starting means if the speed of a vehicle in which the hydraulic antilock braking and/or anti-spin regulation system is implemented is below a predefined threshold.

A corresponding implementation of the inventive method would avoid unnecessary recognition and/or compensation procedures.

The invention will be explained below in more detail with reference to exemplary embodiments, referring to the figures in which:
- FIG.1: shows a flow chart illustrating an implementation of the inventive method;
- FIG.2: shows a depiction of an environment in which the invention may be implemented; and
- FIGs.3a, 3b, 4a,4b: show simplified depictions of how the environment in FIG.2 is used.

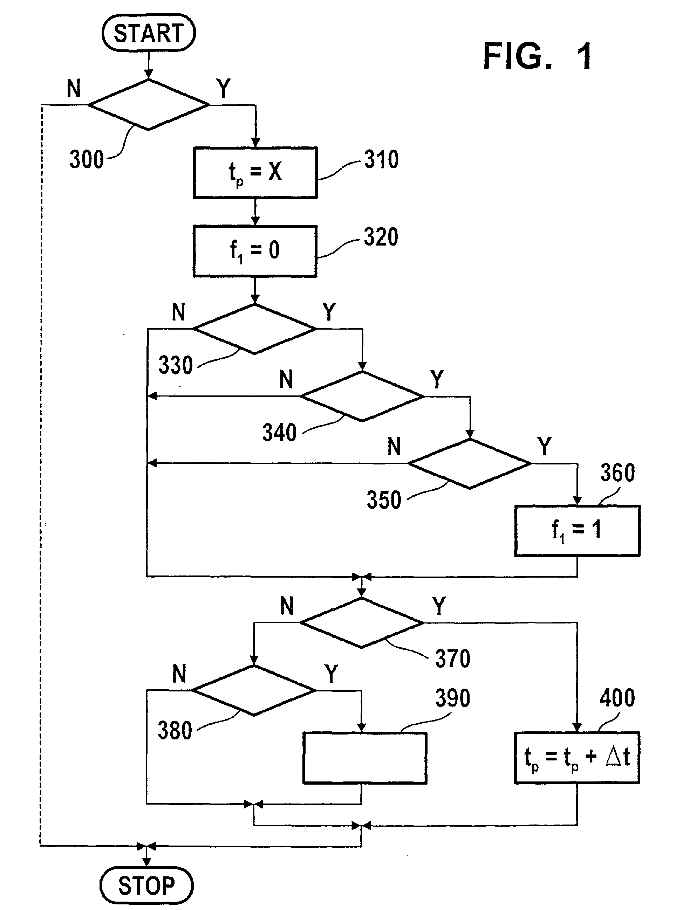

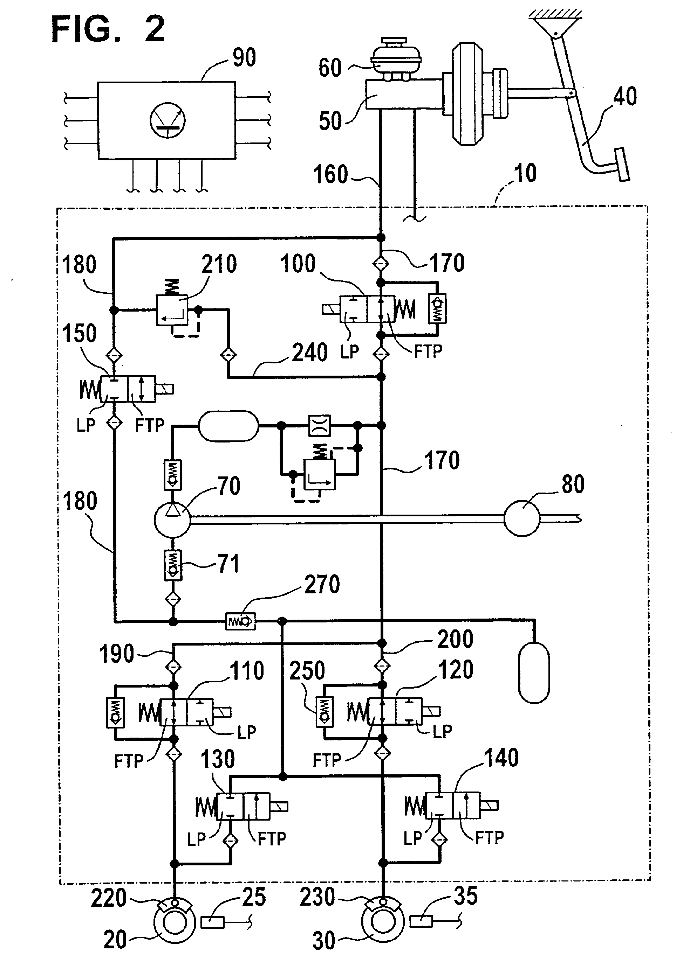

By way of example, as mentioned above, the graph in FIG. 1 depicts a flow chart illustrating an exemplary implementation o the inventive method. However, in order to allow a better understanding thereof, firstly an environment is described in which the invention is implemented, while referring to FIGs.2-4. But then, the invention itself is explained in detail while further referring to Fig. 1.

FIG. 2 shows a hydraulic antilock braking and/or anti-spin regulation system which is eligible for use with the inventive method and implemented as a first brake circuit 10 of a hydraulic braking system within a car. By way of example, the first brake circuit 10 is used for braking the right rear wheel 20 and the left front wheel 30 of a car which has an all-wheel drive (hence, there is a second brake circuit for the remaining two wheels required which, for simplicity, is not shown in FIG. 2). A corresponding hydraulic brake system is referred fto as "X-brake circuit partition". However, it is to be understood, that any other hydraulic brake system (as well as any other wheel drive such as a rear wheel drive or a front wheel drive and any other hydraulic antilock braking and/or anti-spin regulation system in general) may be used with the inventive method. This in particular holds for a so-called "TT-brake circuit/ partition", in which a separate brake circuit is used for both rear wheels and for both front wheels, respectively, in a car which has a rear or a front wheel drive. Moreover, the inventive method also may be used within a "X-brake circuit partition" in a car which has a rear or a front wheel drive.

The first brake circuit 10 has two independent pressure sources. Firstly, the car driver can produce pressure by pushing a brake pedal 40 which is connected to a main brake cylinder 50 with a pressurized medium reservoir 60. Secondly, there is a high pressure pump 70, which is driven by an electrical driving motor 80 and which is controlled by a control unit 90. Hence, the first brake circuit 10 is eligible for a simple pedal driven braking procedure as well as -principally- for use as a anti-lock braking system (ABS) or as an anti-spin regulation (ASR) system both of which require the implementation of the motor driven pressure pump 70 in order to built up pressures independently of what any car driver is doing.

In more detail, anti-lock braking (ABS) is performed in principle by means of detecting wheel speeds during a braking procedure and frequently opening and closing individual wheel brakes 220, 230 in case a wheel speed is reduced to zero but the total speed of the car is not. On the other hand, anti-spin regulation (ASR) is performed in principle by means of detecting wheel speeds during a starting or driving procedure and frequently closing and opening individual wheel brakes 220, 230 in case the speed of a driven wheel exceeds the speed of other wheels and/or the total speed of the car. Hence, there are wheel speed sensors 25, 35 implemented, which are eligible to detect the speed of each individual wheel 20, 30.

Moreover, the first brake circuit 10 is branched and comprises within its branches six 2/2 port directional control valves 100, 110, 120, 130, 140 and 150 (shortly: 2/2 valves 100, 110, 10, 130, 140 and 150). Each of these 2/2 valves 100, 110, 120, 130, 140, 150 can be switched between a bidirectional (or one-directional in case of 2/2 valves 130 and 140) flow-through position FTP and a locking position LP. Thereby, each switch is implemented by means of a spring-actuated first position (i.e. either the flow-through position FTP or the locking position LP) and an electromagnetically-actuated second position (i.e. either the locking position LP or the flow-through position FTP), as indicated in FIG. 2. Hence, each switch (and therefore each 2/2 valve 100, 110, 120, 130, 140, 150) is controlled by means of charging or discharging a corresponding electromagnetic magnet and said charging or discharging procedures are controlled by the control unit 90. As a result, the first brake circuit 10 can be modified by the control unit 90 by means of opening and closing any of the 2/2 valves 100, 110, 120, 130, 140 and/or 150 and therefore opening and closing the individual branches of the first brake circuit 10. Hence, the first brake circuit can be set into several configurations which are required to perform simple pedal driven braking, ABS braking and/or ASR procedures.

Within FIG. 2, the first brake circuit is shown in a configuration eligible for simple pedal driven braking. In this configuration, pushing the pedal 40 results in a pressure production within the main brake cylinder 50. The pressure is transported within a pressurized medium along a root line 160, a first branch 170 (through the first 2/2 valve 100, in the following referred to as shut-off valve 100, which is in its flow-through position FTP) and a third and a fourth branch 190, 200 (through the second respectively third 2/2 valves 110 resp. 120, in the following referred to as first resp. second inlet 2/2 valves 110, 120, which are in their flow-through positions FTP). From this, a first and a second wheel brake 220, 230 are activated.

Within this constellation, switching on the high pressure pump 70 by means of the electrical driving motor 80 (and controlled by the control unit 90) would basically have no effect on the braking system. This is because the 2/2 valve 150 (which is in the following referred to as suction 2/2 valve 150) within the second branch 180 is in its locking position LP. Hence, there is no pressurized medium supplied into the inlet 71 of the high pressure pump 70 which otherwise would be available out of the pressurized medium reservoir 60 through the second branch 180 (which is in the following referred to as suction channel 180).

On the other hand, by means of switching the 2/2 valve 150 into its flow-through position FTP and switching the shut-off 2/2 valve 100 into its locking position LP the high pressure pump 70 instead of the brake pedal 40 might produce pressure on the wheel brakes 220, 230. Thereby, the maximum pressure is limited by means of a pressure control valve 210 which is adjusted to any desired maximum pressure and which would open an overflow line 240 in case a corresponding threshold is exceeded.

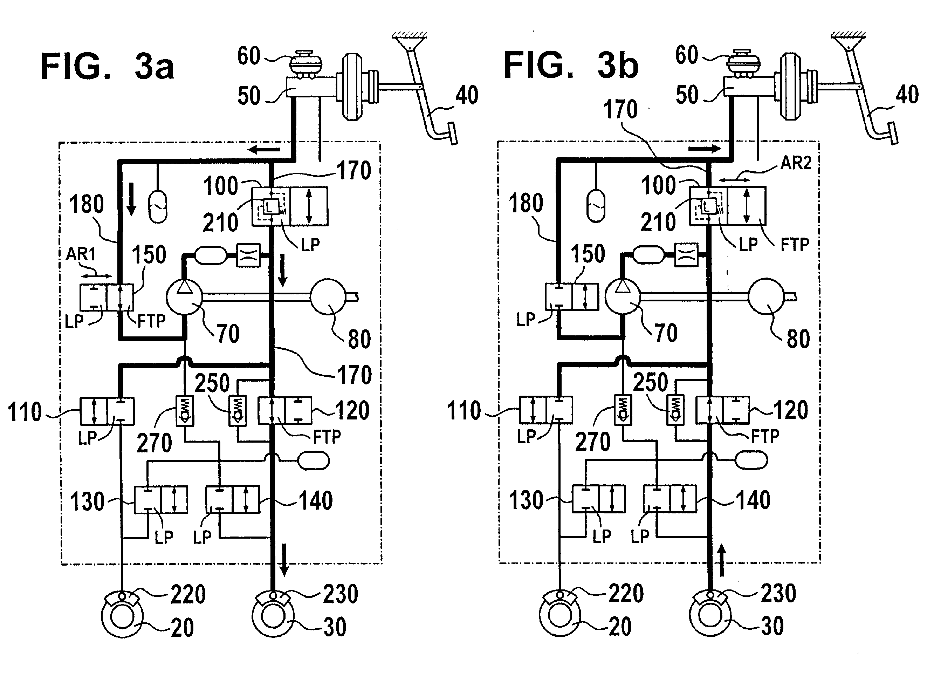

Within the simplified depiction of FIG. 3a it is shown, how the environment out of FIG. 2 can be used in an ASR mode for an all-wheel or an front wheel drive to exclusively built up a high pressure on the brake 230 which acts on the left front wheel 30. For this purpose, the high pressure pump 70 is driven by the electrical driving motor 80 (and con-trolled by a control unit 90); the second inlet 2/2 valve 120 is in its flow-through position FTP, whereas the first inlet 2/2 valve 110 is in its locking position JP; the shut-off 2/2 valve 100 is in its locking position LP; and the suction 2/2 valve 150 is frequently switched between its flow-through position FTP and its locking position LP (as indicated by arrow AR1) in order to built up pressure in a pulsed manner.

As a result, whenever the suction 2/2 valve 150 is in its flow-through position FTP, pressurized medium is taken into the first branch 170 through the suction channel 180 out of the pressurized medium reservoir 60. Hence, the pressure on the second brake 230 and therefore the braking power on the left front wheel 230 is increased. On the other hand, no pressure is built up on the first brake 220. However, in case there occurs a leak on the second inlet 2/2 valve 120, both the pressure on the second brake 230 is decreased and a pressure is built up on the first brake 220. Moreover, in case there occurs a leak on the shut-off 2/2 valve 100, again the pressure on the second brake 230 is reduced.

The corresponding use of the environment out of FIG. 2 is in particular eligible for performing an ASR procedure on a car with a front wheel drive. However, it might also be used for such purpose within a car with an all-wheel drive.

Within the simplified depiction of FIG. 3b it is shown, how the environment out of FIG. 2 can be used in an ASR mode for an all wheel or an front wheel drive to exclusively lower the pressure on the brake 230 which acts on the left front wheel 30. For this purpose, the electrical driving motor 80 and hence the high pressure pump 70 is switched off and/or the suction 2/2 valve 150 is switched into its locking position LP; the second inlet 2/2 valve 120 may remain open (however, this is not necessary, since the second inlet 2/2 valve 120 is bypassed by a one-way bypass valve 250 which opens in the corresponding direction as indicated in FIG. 2) and the shut-off 2/2 valve 100 is frequently switched between its flow through position FTP and its locking position LP as indicated by arrow AR2 in order to reduce the pressure in a pulsed manner.

Resulting thereof, whenever the shut-off 2/2 valve 100 is in its flow-through position FTP pressurized medium is taken back into the pressurized medium reservoir 60 through the first branch 170. On the other hand, the pressure on the first brake 220 remains unchanged. Again both results would be affected in case of leaks occurring at the suction 2/2 valve 150, the shut-off 2/2 valve 100 or the first inlet 2/2 valve 110.

The corresponding use of the environment out of FIG. 2 is in particular eligible for performing an ASR procedure on a car with a front wheel drive. However, it might also be used for such purpose within a car with an all-wheel drive.

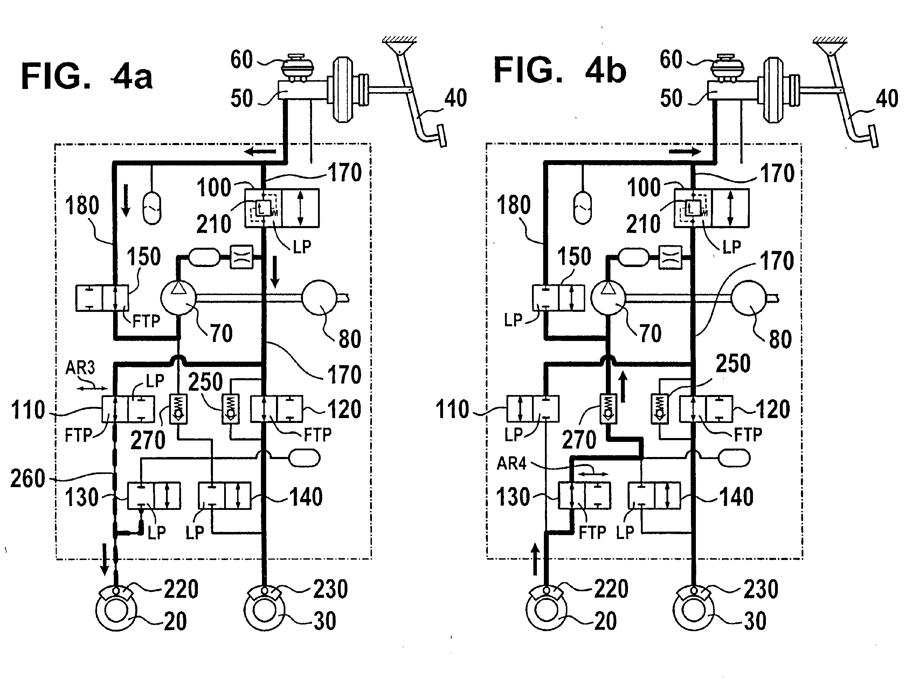

Within the simplified depiction of FIG. 4a it is shown, how the environment out of FIG. 2 can be used in an ASR movie for an all wheel drive to increase the pressure on the first brake 220 acting on the right rear wheel 20 and in addition hereto (but on a lower level) to increase the pressure on the second brake 230 acting on the left front wheel 30. For this purpose, the electrical driving motor 80 and therefore the high pressure pump 70 is switched on; the second inlet 2/2 valve 120 and the suction 2/2 valve 150 are in their flow-through position FTP; the shut-off 2/2 valve 100 is in its locking position LP; and the first inlet 2/2 valve 110 is frequently switched between its flow-through position FTP and locking position LP.

As a result, pressurized medium is transported out of the pressurized medium reservoir 60 through the suction channel 180 into both the second brake 230 and -in case the first inlet 2/2 valve 110 is in its flow-through position FTP- the first brake 220. Hence, a pressure is built up on the first brake 220 which is lower than the pressure on the second brake 230 as is indicated by the dashed line 260. However, in case there occurs a leak on the first inlet 2/2 valve 110 in its locking position LP, the pressure on the first brake 220 is increased and the pressure on the second brake 230 is decreased in an undefined manner. Moreover, in case there occurs a leak on the shut-off 2/2 valve 100, the pressure on both wheel brakes 220, second brake 230 is decreased.

The corresponding use of the environment out of FIG. 2 is in particular eligible for performing an ASR procedure on a car with an all-wheel drive. In such case it may be desired to apply a higher pressure to one wheel brake 230 than to the other wheel brake 220, both of which are connected to the same brake circuit.

Within the simplified depiction of FIG. 4b it is shown, how the environment out of FIG. 2 can be used in an ASR mode for an all-wheel drive to reduce the pressure on the first brake 220 acting on the right rear wheel 20 while maintaining a high pressure on the second brake 230 acting on the left front wheel 30. For this purpose, the electrical driving motor 80 and therefore the high pressure pump 70 is switched on and the suction 2/2 port directional control valve 150 is in its locking position LP; the first inlet 2/2 valve 110 is in its locking position LP; the 2/2 valve 130 is frequently switched between its flow-through position FTP and its locking position LP; the second inlet 2/2 valve 120 is in its flow-through position FTP; and the shut-off 2/2 valve 100 is in its locking position LP.

As a result, whenever the 2/2 valve 130 is in its flow-through position FTP, pressurized medium is sucked off from the first brake 220 through a one-way valve 270 due to the sucking power of the high pressure pump 70. At the same time, the higher pressure applied at the second brake 230 is prevented from pushing back pressurized medium to the first brake 220 by means of having the first inlet 2/2 valve 110 in its locking position LP. Moreover, the pressure at the second brake 230 is maintained at a predefined level and not increased, since the pressure control valve 210 opens in case any predefined maximum level is exceeded.

However, a leak occurring at the first inlet 2/2 valve 110 would allow pressurized medium to flow to the first brake 220 and therefore disturb the procedure.

The corresponding use of the environment out of FIG. 2 is in particular eligible for performing an ASR procedure on a car with an all-wheel drive. In such case, it may be desired to reduce the pressure on one wheel brake 220 only, even though two wheel brakes 220, 230 are connected to the same brake circuit.

Not shown is the situation of maintaining pressures at the first brake 220 or the second brake 230. Hereto, for example, the first inlet 2/2 valve 110 and the 2/2 valve 130, and/or the second inlet 2/2 valve 120 and the 2/2 valve 140 are in their corresponding locking positions LP. Hence, the aim of maintaining the pressure is not or not sufficiently achieved if leaks occur at these 2/2-valves 110, 130; 120, 140.

Introducing now the inventive method, as an example, the following situation is considered: a car having a front wheel drive and "X-brake circuit partition" is driven in an ASR mode in which a high pressure is required to be built up and maintained on the brake 230-which acts on the left front wheel 30 as shown in Fig. 3a. However, the right rear wheel brake 220 is driven by the same brake circuit and hence it is necessary to keep the first inlet 2/2 valve 110 in its locking position LP.

Within this situation, after the ASR procedure is started by the control unit 90, a procedure mode is selected as indicated by a first decision box 300 in FIG. 1, in which a particular high pressure is to be built up (this decision, as well as all decisions and steps described in the following, take place within the control unit 90). Hence, a variable for the pressure building time tₚ is set to a correspondingly large value X (step 310), for example up to several hundred msec.

Then a leak flag fl is reset to zero (step 320). Since in some situations it is not required or desired to detect and/or compensate for any leaks, for such situations the leak flag f, is supposed to remain zero, no matter if there are leaks or not. Hence, a corresponding decision is made now: For example, it is decided, if the car speed as measured by already available measuring components (not shown) is below a certain threshold, for example 5 km/h (decision box 330). If not, the leak flag f, remains zero; if so, the inventive leakage detection takes place:.

Now, in order to detect a leakage in accordance with the inventive method, it is decided, if the estimated pressure (as estimated by the control unit 90 while taking account any earlier pressure building times) exceeds a predefined threshold, for example 50 bar (decision box 340). If not, the leak flag fl remains zero; if so, it is further decided if the difference of the wheel speeds of the right rear wheel 20 and the left front wheel 30 (as calculated by the control unit 90 from values measured by the wheel speed sensors 25 and 35) exceeds a predefined threshold, for example 20 km/h (decision box 350). If not, the leak flag f, remains zero; if so, the conclusion of the presence of a leak is made and therefore the leak flag fl is set to one (step 360).

Moreover, in order to compensate for any detected leak, firstly, the decision is made, if the leak flag fl is set to 1 (decision box 370). If not, the variable for the pressure building time tp remains unchanged; if so, an offset Δt is added to the initial value X of the pressure building time tp, for example 10 µs (step 400). Additionally or alternatively, the time for maintaining the pressure is reduced by means of adding a negative offset (not shown).

Furthermore, in case the leak flag fl is not set and therefore still equal to zero, and in case the obtained pressure exceeds a predefined threshold (decision box 380), the time for maintaining the pressure is increased (step 390). However, this step is not executed for any pressure in case the leak flag fl is set to one.

The afore described steps of the inventive method may be implemented in the ASR procedure on several ways: On the one hand, it is possible, to estimate the pressure, detect the wheel speeds, calculate the difference of the wheel speeds and fulfill the above described steps during one out of a frequency of braking actions and modify the pressure building time and/or the pressure maintaining time during the succeeding braking action. On the other: hand, it is possible to estimate the pressure, detect the wheel speeds, calculate the difference of the wheel speed, fulfill the above described steps and also modify the pressure building time and/or the pressure maintaining time just during one braking action. Furthermore, in case the pressure is build up pulse, by pulse, it is possible to estimate the pressure, detect the wheel speeds, calculate the difference of the wheel speeds and fulfill the above described steps during one pressure building pulse (or during the following pressure maintaining time) and modify the pressure building time during the succeeding pulse (s) and/or modify the following pressure maintaining time(s). Moreover, any other suitable implementation can be used with the invention. Hence, there is no particular timing required for the inventive method.

As a result, basically the same pressure level and therefore basically the same performance is achieved in case of presence of a leak, as in case of no leaks. Within the example considered, this is of particular importance in case a car is started on a micro split surface of a descent since in such cases a particularly high pressure level is required, which is to be maintained for a relatively long time.

In addition hereto, the afore described steps of the inventive method can be completed by further steps. For example, instead of applying the inventive method just for one pressure threshold (decision box 340) and one corresponding relative wheel speed difference (decision box 350), this can be done for any number of pressure thresholds and corresponding relative wheel speed differences.

Moreover, in case of an all-wheel drive in a situation in which a high pressure is required at one wheel and a lower (but not zero) pressure on another wheel the estimated pressure difference may be taken into account together with a corresponding maximum value for the relative wheel speed difference. Furthermore, the wheel speed of a braked wheel can be compared to the wheel speed of any other non- or less-braked wheel, no matter if this is part of the same or of the other brake circuit.

## Claims

1. Method for recognition of and/or compensation for a leakage within a hydraulic anti-lock braking and/or anti-spin regulation system, wherein already available system components (20, 25, 30, 35, 70, 80, 90) are used for the recognition of and/or compensation for said leakage, wherein hydraulic pressure is built up by pressure building means (70, 80); wherein the impact on any wheel brake (220, 230) principally corresponds to a reduction of a velocity of each corresponding wheel (20, 30); wherein the velocity of the wheels (20, 30) is measured by means of wheel speed sensors (25, 35), wherein an obtained pressure is estimated by estimation means (90); wherein a predefined relation between the obtained pressure as estimated and the resulting velocity of any braked wheel is used to determine the absence or presence of a leakage within the hydraulic antilock braking and/or anti-spin regulation system by determination means (90), **characterized in that** in case the presence of a leakage is detected by determination means (90), a pressure building time (tₚ) is correspondingly increased by control means (90) or a pressure holding time is correspondingly decreased by control means (90).

2. Method according to claim 1, **characterized in that**
a predefined relation between the obtained pressure as estimated and the corresponding impact on the wheel brakes (220, 230) is used to determine the absence or presence of a leakage within the hydraulic antilock braking and/or anti-spin regulation system by the determination means (90).

3. Method according to one of the foregoing claims,
**characterized in that** for the estimation of the obtained pressure the pressure building time (tp) is taken into account by the estimation means (90).

4. Method according to one of the foregoing claims,
**characterized in that**
a) pressure is built up by pressure building means (70, 80) for braking at least one driven wheel (30) during an anti-spin regulation;
b) the velocity of the driven and braked wheel(30) and the velocity of a non-driven and non-braked heel (20) or a driven but non-braked wheel (20) or a driven and less-braked wheel (20) are detected by means of wheel speed sensors (25, 35);
c) the detected velocities are subtracted from each other by subtraction means (90);
d) the thereby obtained number is compared to a predefined maximum number by comparison means (90); and
e) an exceeding of the maximum number is interpreted as presence of a leakage within the hydraulic system (and vice versa) by determination means (90).

5. Method according to one of the foregoing claims,
**characterized in that** starting of the leakage recognition and/or compensation procedure by starting means (90) depends on the results of a comparison of determined values against a predefined threshold by comparison means (90).

6. Method according to claim 5,
**characterized in that** the leakage recognition and/or compensation procedure is only started by the starting means (90) if the speed of a vehicle in which the hydraulic anti-lock braking and/or anti-spin regulation system is implemented is below a predefined threshold.

## Patentansprüche

1. Verfahren zur Erkennung und/oder Kompensation einer Leckage innerhalb eines hydraulischen Antiblockier- und/oder Antischlupfregelungssystems, wobei bereits erhältliche Systemkomponenten (20, 25, 30, 35, 70, 80, 90) für die Erkennung und/oder Kompensation der Leckage verwendet werden, wobei Hydraulikdruck durch Druckaufbaumittel (70, 80) aufgebaut wird; wobei die Auswirkung auf eine beliebige Radbremse (220, 230) im Grunde einer Reduzierung einer Geschwindigkeit jedes entsprechenden Rads (20, 30) entspricht, wobei die Geschwindigkeit der Räder (20, 30) mit Hilfe von Raddrehzahlsensoren (25, 35) gemessen wird, wobei ein erhaltener Druck durch Schätzmittel (90) geschätzt wird; wobei anhand einer vordefinierten Beziehung zwischen dem erhaltenen Druck wie geschätzt und der resultierenden Geschwindigkeit eines beliebigen gebremsten Rads die Abwesenheit oder Anwesenheit einer Leckage innerhalb des hydraulischen Antiblockier- und/oder Antischlupfregelungssystems durch Bestimmungsmittel (90) bestimmt wird, **dadurch gekennzeichnet, daß** in dem Fall, daß die Anwesenheit einer Leckage durch Bestimmungsmittel (90) detektiert wird, eine Druckaufbauzeit (tp) entsprechend durch Steuermittel (90) verlängert wird oder eine Druckhaltezeit durch Steuermittel (90) entsprechend herabgesetzt wird.

2. Verfahren nach Anspruch 1, **dadurch gekennzeichnet, daß** anhand einer vordefinierten Beziehung zwischen dem erhaltenen Druck wie geschätzt und der entsprechenden Auswirkung auf die Radbremsen (220, 230) die Abwesenheit oder Anwesenheit einer Leckage innerhalb des hydraulischen Antiblockier- und/oder Antischlupfregelungssystems von dem Bestimmungsmittel (90) bestimmt wird.

3. Verfahren nach einem der vorhergehenden Ansprüche, **dadurch gekennzeichnet, daß** für die Schätzung des erhaltenen Drucks die Druckaufbauzeit (tp) von dem Schätzmittel (90) berücksichtigt wird.

4. Verfahren nach einem der vorhergehenden Ansprüche,
**dadurch gekennzeichnet, daß**
a) Druck von dem Druckaufbaumittel (70, 80) zum Bremsen mindestens eines angetriebenen Rads (30) während einer Antischlupfregelung aufgebaut wird;
b) die Geschwindigkeit des angetriebenen und gebremsten Rads (30) und die Geschwindigkeit eines nichtangetriebenen und ungebremsten Rads (20) oder eines angetriebenen, aber ungebremsten Rads (20) oder eines angetriebenen und weniger gebremsten Rads (20) mit Hilfe von Raddrehzahlsensoren (25, 35) detektiert werden;
c) die detektierten Geschwindigkeiten voneinander durch Subtaktionsmittel (90) subtrahiert werden;
d) die **dadurch** erhaltene Zahl mit einer vordefinierten Maximalzahl durch Vergleichsmittel (90) verglichen wird und
e) ein Überschreiten der Maximalzahl als Anwesenheit einer Leckage innerhalb des Hydrauliksystems (und umgekehrt) von Bestimmungsmitteln (90) bestimmt wird.

5. Verfahren nach einem der vorhergehenden Ansprüche, **dadurch gekennzeichnet, daß** der Beginn der Leckageerkennungs- und/oder Kompensationsprozedur durch Startmittel (90) von den Ergebnissen eines Vergleichs von bestimmten Werten mit einem vorbestimmten Schwellwert durch Vergleichsmittel (90) abhängt.

6. Verfahren nach Anspruch 5, **dadurch gekennzeichnet, daß** die Leckageerkennungs- und/oder Kompensationsprozedur von dem Startmittel (90) erst dann begonnen wird, wenn die Geschwindigkeit eines Fahrzeugs, in dem das hydraulische Antiblockier- und/oder Antischlupfregelungssystem implementiert ist, unter einem vordefinierten Schwellwert liegt.

## Revendications

1. Procédé de reconnaissance et/ou de compensation d'une fuite à l'intérieur d'un système de réglage de freinage hydraulique à antiblocage et/ou anti-patinage, en utilisant des composants du système déjà disponibles (20, 25, 30, 35, 70, 80, 90) pour la reconnaissance et/ou la compensation de la fuite, selon lequel une pression hydraulique est accumulée par des moyens d'accumulation de pression (70, 80) ; l'impact sur un frein de roue quelconque (220, 230) correspond pratiquement à une diminution de la vitesse de chaque roue correspondante (20, 30) ; la vitesse des roues (20, 30) est mesurée au moyen de capteurs de vitesse de roue (25, 35), une pression obtenue est estimée par des moyens d'estimation (90) ; et une relation prédéfinie entre la pression obtenue ainsi estimée et la vitesse résultante d'une quelconque roue freinée est utilisée pour déterminer l'absence ou la présence d'une fuite à l'intérieur du système de réglage de freinage hydraulique à antiblocage et/ou anti-patinage par des moyens de détermination (90),
**caractérisé en ce que**
dans le cas où la présence d'une fuite est détectée par les moyens de détermination (90), un temps d'accumulation de pression (tp) est augmenté d'une façon correspondante par des moyens de commande (90), ou un temps de maintien de pression est diminué de façon correspondante par des moyens de commande (90).

2. Procédé selon la revendication 1,
**caractérisé en ce qu'**
une relation prédéfinie entre la pression obtenue ainsi estimée et l'impact correspondant sur les freins de roue (220, 230) est utilisée par les moyens de détermination (90)pour déterminer l'absence ou la présence d'une fuite à l'intérieur du système de réglage de freinage hydraulique à antiblocage et/ ou à anti-patinage.

3. Procédé selon l'une quelconque des revendications précédentes,
**caractérisé en ce que**
pour estimer la pression obtenue, le temps d'accumulation de pression (tp) est pris en compte par les moyens d'estimation (90).

4. Procédé selon l'une quelconque des revendications précédentes,
**caractérisé en ce que**
a) une pression est accumulée par des moyens d'accumulation de pression (70, 80) pour freiner au moins une roue motrice (30) pendant un réglage de l'anti-patinage ;
b) la vitesse de la roue motrice et freinée (30) et la vitesse d'une roue non motrice et non freinée (20), ou d'une roue motrice mais non freinée (20) ou d'une roue motrice et moins freinée (20) est détectée au moyen de capteurs de vitesse de roue (25, 35) ;
c) les vitesses détectées sont soustraites les unes des autres par des moyens de soustraction (90) ;
d) le nombre ainsi obtenu est comparé à un nombre maximum prédéfini par des moyens de comparaison (90) ; et
e) un dépassement du nombre maximum est interprété comme la présence d'une fuite à l'intérieur du système hydraulique (et vice versa) par les moyens de détermination (90).

5. Procédé selon l'une quelconque des revendications précédentes,
**caractérisé en ce qu'**
on démarre la procédure de reconnaissance et/ou de compensation de fuite par des moyens de démarrage (90) en fonction des résultats d'une comparaison de valeurs déterminées avec un seuil prédéfini par les moyens de comparaison (90).

6. Procédé selon la revendication 5,
**caractérisé en ce qu'**
on démarre la procédure de reconnaissance et/ou de compensation de fuite par les moyens de démarrage (90) uniquement si la vitesse d'un véhicule dans lequel le système de réglage de freinage hydraulique à antiblocage et/ou à anti-patinage est installé, est inférieure à un seuil prédéfini.
